## Europäisches Patentamt

## European Patent Office

## Office européen des brevets

(19)

(11) Veröffentlichungsnummer: **0 089 063**
**B1**

(12)

# EUROPÄISCHE PATENTSCHRIFT

(45) Veröffentlichungstag der Patentschrift:
**28.01.87**

(51) Int. Cl.⁴: **H 04 J 3/14**

(21) Anmeldenummer: **83102565.5**

(22) Anmeldetag: **15.03.83**

(54) **Verfahren und Einrichtung zur Überwachung einer PCM-Codier-/Decodiereinrichtung.**

(30) Priorität: **17.03.82 DE 3209724**

(43) Veröffentlichungstag der Anmeldung:
**21.09.83 Patentblatt 83/38**

(45) Bekanntmachung des Hinweises auf die Patenterteilung:
**28.01.87 Patentblatt 87/5**

(84) Benannte Vertragsstaaten:
**AT CH DE FR IT LI**

(56) Entgegenhaltungen:
**FR - A - 2 252 711**
**US - A - 3 892 923**

(73) Patentinhaber: **Siemens Aktiengesellschaft Berlin und München, Wittelsbacherplatz 2, D-8000 München 2 (DE)**

(72) Erfinder: **Richter, Heinz, Heideweg 4, D-8190 Wolfratshausen (DE)**

## Beschreibung

Die Erfindung betrifft ein Verfahren zur Überwachung einer PCM-Codier-/Decodiereinrichtung mit einem Analog-/Digital-Umsetzer und einer diesem vorgeschalteten Multiplexeinrichtung auf der Sendeseite und mit einem Digital-/Analog-Umsetzer und einer diesem nachgeschalteten Demultiplexeinrichtung auf der Empfangsseite, bei dem in einem nicht der Übertragung von Fernsprechsignalen dienenden Zeitschlitz des PCM-Empfangssignals ein digitales Testsignal eingefügt wird, das nach der Digital-/Analog-Umsetzung als analoges Testsignal über eine Abtast- und Halteschaltung und der Multiplexeinrichtung dem Analog-/Digital-Umsetzer zugeführt und als rückumgesetztes digitales Testsignal einem Vergleich mit dem ausgesendeten digitalen Testsignal unterzogen wird.

Aus dem «telcom report 2», 1979, Beiheft «Digital-Übertragungstechnik», Seiten 41 bis 45 ist eine PCM-Codier-/Decodiereinrichtung, kurz Codec genannt, bekannt. Hierbei werden die Fernsprechsignale mehrerer Kanäle in ein digitales Multiplexsignal umgewandelt und ausgesendet. Auf der Empfangsseite werden die ankommenden Codewörter in Analogsignale umgesetzt und über einen Demultiplexer wieder auf verschiedene Kanäle aufgeteilt. Für ein PCM-Codec ist eine interne, selbständige Überwachung des Codier- und des Decodiervorganges üblich. Hierbei werden die entsprechenden Schaltungsteile eines Multiplexgerätes von einem Prüfsignal durchlaufen und das zurückgewonnene Signal mit dem ursprünglichen verglichen. Es ist sowohl eine Überwachung durch Schleifenbildung in der digitalen Ebene als auch eine Überwachung durch Schleifenbildung in der analogen Ebene bekannt.

Da nun der Sendeteil (Codierer) eines Multiplexers im allgemeinen nicht synchron zum Empfangsteil (Decodierer) betrieben wird und auch im synchronen Betriebsfall keine bestimmte Phasenlage garantierbar ist, sind geeignete Synchronisiermassnahmen bzw. Taktanpassungsmassnahmen vorzusehen. Während der notwendige Synchronisieraufwand auch bei einer Schleifenbildung in der analogen Ebene in die integrierte Steuerbausteine verlagert werden konnte, blieb die Schleifenbildung ein zeitkritisches Problem, da die analogen Prüfsignale auf der Empfangsseite im Rahmen des Zeitmultiplexrahmens ausgesendet wurden und auf der Sendeseite in dem entsprechenden Zeitmultiplexrahmen weiterverarbeitet werden mussten. Um diesem Zeitproblem zu entgehen, wird zwischen dem analogen Ausgang der Empfangsseite und dem analogen Eingang der Sendeseite eine Abtast- und Halteschaltung eingefügt. Über diese Abtast- und Halteschaltung werden Testsignale übertragen. Um zu verhindern, dass die Abtastvorgänge des Testsignals durch den sendeseitigen Abtastschalter zeitlich in die Holdsprünge des empfangsseitigen Abtastvorganges fallen, ist der Abtast- und Halteschaltung eine Glättungsschaltung nachgeschaltet. Die Holdsprünge – also die Einschwingvorgänge bei der Abtastung – werden zwar geringer, durch die Glättungsschaltung kann es jedoch ebenfalls zu Ungenauigkeiten kommen.

In der französischen Patentanmeldung 7 342 156 (Publikationsnummer 2 252 711) ist eine Überwachungsschaltung für Multiplexsysteme beschrieben, in der ebenfalls ein digitales Testsignal in einen freien Zeitschlitz (0 oder 16) des Multiplexrahmens eingefügt wird, anschliessend in ein analoges Testsignal umgesetzt wird, über eine Abtast- und Halteschaltung geführt und als rückumgesetztes digitales Testsignal mit dem ursprünglichen digitalen Testsignal verglichen wird.

Um eine störungsfreie Auswertung des Testsignals zu gewährleisten, wird der Ausgang der Abtast- und Halteschaltung während zweier informationsfreier Zeitschlitze (0 und 16) über den Multiplexer rückgeführt.

Aufgabe der Erfindung ist es, ein Verfahren zur Überwachung für einen PCM-Codec anzugeben, das mit grosser Genauigkeit arbeitet und mit geringem Schaltungsaufwand realisierbar ist.

Ausgehend vom einleitend beschriebenen Stand der Technik, wird die Aufgabe dadurch gelöst, dass dasselbe analoge Testsignal mehrmals aufeinanderfolgend von der Abtast- und Halteschaltung abgetastet wird, dass während eines darauffolgenden Multiplexrahmens keine Abtastung durch die Abtast- und Halteschaltung erfolgt und dass die Auswertung des rückumgesetzten digitalen Testsignals am Ausgang des Analog-/Digital-Umsetzers nach einem Sicherheitszeitbereich nach dem letzten Abtastvorgang desselben analogen Testsignals während der Zeitdauer eines Multiplexrahmens erfolgt.

Dieses Verfahren führt zu einer einfachen Überwachungsschaltung. Es sind weder aufwendige Synchronisiereinrichtungen noch zusätzliche Glättungsschaltungen erforderlich. Durch den Sicherheitszeitbereich werden Ungenauigkeiten bei der Auswertung des analogen Testsignals vermieden, die dadurch entstehen, dass das analoge Testsignal am Ausgang der Abtast- und Halteschaltung dann ausgewertet wird, wenn gleichzeitig am Eingang der Abtast- und Halteschaltung Hold-Sprünge durch Abtastvorgänge entstehen. Das Testsignal wird in einen Zeitschlitz eingeblendet, der nicht der Übertragung von Fernsprechsignalen oder sonstiger Daten für einen Teilnehmer dient, wie beispielsweise der Kennzeichen-Zeitschlitz.

Es ist vorteilhaft, dass jedes analoge Testsignal dreimal aufeinanderfolgend von der Abtast- und Halteschaltung abgetastet wird.

Bereits nach dreimaligen Anlegen desselben analogen Prüfsignals an den Eingang der Abtast- und Halteschaltung reicht die Genauigkeit für eine Überprüfung aus.

Es ist vorteilhaft, dass Testsignale mit aufeinanderfolgenden Amplitudenstufen vorgesehen sind.

Dadurch, dass sich die Amplituden des analogen Testsignals treppenförmig ändern, muss die Abtast- und Halteschaltung jeweils nur auf den nächsthöheren bzw. nächstniedrigeren Wert umgeladen werden.

Weitere vorteilhafte Ausbildungen der Erfindung sind in den übrigen Unteransprüchen angegeben.

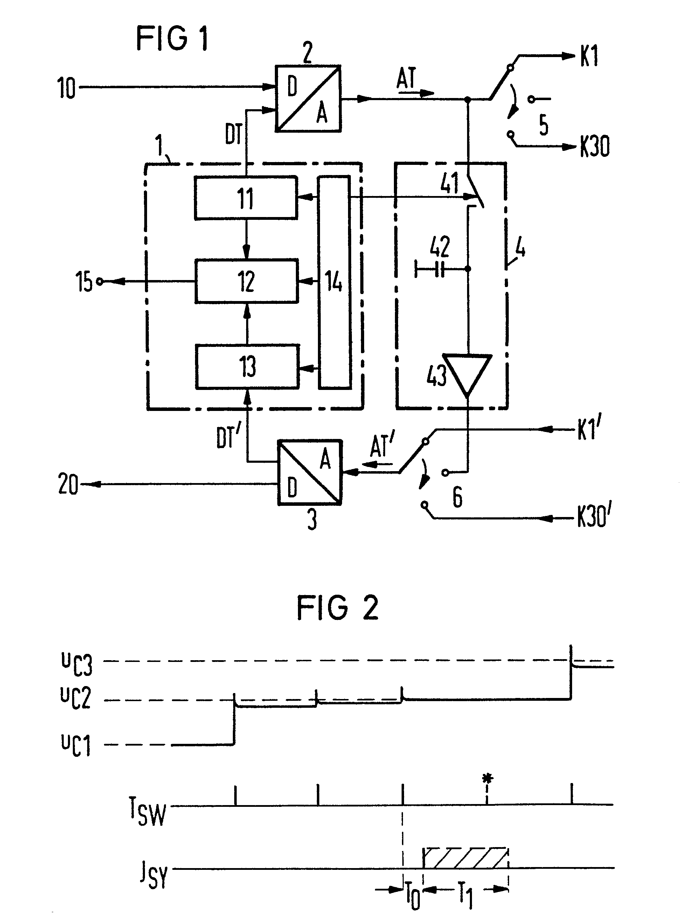

Ein Ausführungsbeispiel der Erfindung wird anhand der Fig. 1 und 2 beschrieben.

Es zeigen

Fig. 1 ein Prinzipschaltbild einer Überwachungseinrichtung und

Fig. 2 ein dazugehöriges Zeitdiagramm.

Die in Fig. 1 dargestellte Überwachungseinrichtung enthält auf der Empfangsseite einen Digital-/Analog-Umsetzer 2, dem über den Eingang 10 ein digitales Zeitmultiplexsignal zugeführt wird. Nach der Umsetzung in analoge Spannungswerte wird dieses Zeitmultiplexsignal durch eine Demultiplexeinrichtung 5 auf die Kanäle K1 bis K30 aufgeteilt. Auf der Sendeseite werden 30 Kanäle K1' bis K30' über eine Multiplexeinrichtung 6 einem Analog-/Digital-Umsetzer 3 zugeführt, an dessen Ausgang 20 das sendeseitige Zeitmultiplexsignal abgegeben wird. Die Überwachungseinrichtung enthält noch eine Überwachungssteuerung 1, die Teil eines empfangsseitigen Steuerschaltkreises ist. Die Überwachungssteuerung 1 enthält eine eigentliche Steuerung 14, die einen digitalen Testsignalgenerator 11, einen Vergleicher 12, eine Empfangsschaltung 13 und den Schalter 41 einer Abtast- und Halteschaltung 4 steuert. Ein Ausgang des digitalen Testsignalgenerators 11 ist ebenfalls dem Digital-/Analog-Umsetzer zugeführt. Gleichzeitig liegt das abgegebene digitale Testsignal an dem Vergleicher 12 an, der über die Empfangsschaltung 13 das zurückgeführte digitale Testsignal DT' von dem Analog-/Digital-Umsetzer 3 zugeführt wird. Die Abtast- und Halteschaltung liegt hierbei eingangsseitig an dem Ausgang des Digital-/Analog-Umsetzers 2 und ausgangsseitig auf einem Eingang der Multiplexeinrichtung 6. Die Abtastschaltung enthält einen üblichen Speicherkondensator 42 und einen Verstärker 43.

Das empfangene digitale Zeitmultiplexsignal enthält hier ausser dreissig 8-Bit-Zeitabschnitten für 30 zu übertragende Kanäle zwei weitere Zeitabschnitte, in denen ein Rahmenkennungswort bzw. Kennzeichen übertragen werden. Anstelle der empfangenen Daten im Kennzeichen-Zeitschlitz wird dem Digital-/Analog-Umsetzer 2 ein digitales Testsignal DT zugeführt. Dieses gelangt als analoges Testsignal AT auf den Eingang der Abtast- und Halteschaltung 4. Dasselbe analoge Testsignal wird dreimal hintereinander von der Abtast- und Halteschaltung 4 abgetastet, wie aus Fig. 2 zu ersehen ist. Der Takt $T_{SW}$, gibt die Schliessung des Schalters 41 der Abtast- und Halteschaltung an. Jeder vierte Takt ist ausgeblendet. Dieser Takt ist durch ein Sternchen in Fig. 2 gekennzeichnet. War der Speicherkondensator 42 auf einen Spannungswert $u_{c1}$ aufgeladen, so erreicht er nach einem dreimaligen Abtastvorgang seinen neuen Spannungswert $u_{c2}$. Dieser Spannungswert bleibt bis zu einem neuen Abtastvorgang nach zwei Zeitmultiplexrahmen gespeichert. Dann wird der Speicherkondensator 42 auf den neuen Spannungswert $u_{c3}$ aufgeladen. Nach dem dritten Abtastvorgang einer Abtastfolge wird noch

ein Sicherheitszeitbereich $T_0$ abgewartet, bis das analoge Testsignal AT' am Ausgang der Abtast- und Halteschaltung ausgewertet wird. Dieser Zeitpunkt ist in Fig. 2 durch einen Synchronimpuls $I_{SY}$ angedeutet. Während der Zeitdauer eines Multiplexpulsrahmens $T_1$, der frei von Hold-Sprüngen ist, wird das analoge Testsignal AT' dem Analog-/Digital-Umsetzer 3 während des Kennzeichen-Zeitschlitzes zugeführt. Dieser setzt das analoge Testsignal AT' wieder in ein digitales Testsignal DT' um und gibt es an die Empfangsschaltung 13 der Überwachungssteuerung 1 weiter, die nach dem Sicherheitszeitbereich $T_0$ aufnahmebereit ist. Ergibt sich in dem Vergleicher 12 eine unzulässige Abweichung des geschleiften digitalen Testsignals DT' vom ausgesendeten digitalen Testsignal DT, so erfolgt eine Fehlermeldung am Ausgang 15 des Vergleichers.

Nicht zur Erfindung gehörende Schaltungsdetails, die das Auswerten und Einblenden des Rahmenkennungswortes und der Daten im Kennzeichen-Zeitschlitz betreffen, sind aus Gründen der Übersichtlichkeit nicht dargestellt.

Die Überwachungssteuerung 1 kann mit handelsüblichen Bauteilen aufgebaut werden. Als Empfangsschaltung dient ein üblicher 8-Bit-Speicherbaustein, als digitaler Testsignalgenerator eignet sich ein Vorwärts-/Rückwärtszähler, der digitale Vergleicher ist ebenfalls ein handelsüblicher Baustein und die Steuerung 14 kann ebenfalls mit herkömmlichen Bausteinen aufgebaut werden. In einer praktischen Ausführung ist die Überwachungssteuerung Teil eines integrierten Empfangsbausteines. Es ist natürlich ebenfalls möglich, einen Mikroprozessor einzusetzen.

**Patentansprüche**

1. Verfahren zur Überwachung einer PCM-Codier/Decodiereinrichtung mit einem Analog-/Digital-Umsetzer (3) und einer diesem vorgeschalteten Multiplexeinrichtung (6) auf der Sendeseite und mit einem Digital-/Analog-Umsetzer (2) und einer diesem nachgeschalteten Demultiplexeinrichtung (5) auf der Empfangsseite, bei dem in einem nicht der Übertragung von Fernsprechsignalen dienenden Zeitschlitz des PCM-Empfangssignals ein digitales Testsignal (DT) eingefügt wird, das nach der Digital-/Analog-Umsetzung als analoges Testsignal (AT) über eine Abtast- und Halteschaltung (4) und der Multiplexeinrichtung (6) dem Analog-/Digital-Umsetzer (3) zugeführt und als rückumgesetztes digitales Testsignal (DT') einem Vergleich mit dem ausgesendeten digitalen Testsignal (DT) unterzogen wird, dadurch gekennzeichnet, dass dasselbe analoge Testsignal (AT) mehrmals aufeinanderfolgend von der Abtast- und Halteschaltung (4) abgetastet wird, dass während eines darauffolgenden Multiplexpulsrahmens keine Abtastung durch die Abtast- und Halteschaltung (4) erfolgt und dass die Auswertung des rückumgesetzten digitalen Testsignals (DT') am Ausgang des Analog-/Digital-Umsetzers (3) nach einem Sicherheitszeitbereich

(T$_0$) nach dem letzten Abtastvorgang desselben analogen Testsignals (AT) während der Zeitdauer (T$_1$) eines Multiplexrahmens erfolgt.

2. Verfahren nach Anspruch 1, dadurch gekennzeichnet, dass jedes analoge Testsignal (AT) dreimal aufeinanderfolgend von der Abtast- und Halteschaltung (4) abgetastet wird.

3. Verfahren nach Anspruch 1 oder 2, dadurch gekennzeichnet, dass Testsignale (DT, AT) mit aufeinanderfolgenden Amplitudenstufen vorgesehen sind.

4. Einrichtung zur Durchführung des Verfahrens nach einem der vorhergehenden Ansprüche mit einem Digital-/Analog-Umsetzer (2) auf der Empfangsseite, dessen Ausgang mit einer Demultiplexeinrichtung (5) und einer Abtast- und Halteschaltung (4) verbunden ist, mit einem Analog-/Digital-Umsetzer (3) auf der Sendeseite, dem eine Multiplexeinrichtung (6), der auch der Ausgang der Abtast- und Halteschaltung zugeführt ist, vorgeschaltet ist, und mit einer Überwachungssteuerung (1), die eine Steuerung (14), einen digitalen Testsignalgenerator (11), eine Empfangsschaltung (13) und einen digitalen Vergleicher (12) enthält, dadurch gekennzeichnet, dass die Steuerung (14) nach mehrmaligem Abtasten desselben analogen Testsignals (AT) durch die Abtast- und Halteschaltung (4) während des folgenden Multiplexpulsrahmens den Abtastvorgang unterdrückt und dass die Abtast- und Halteschaltung (4) ausser einem Speicherkondensator (42) keine weiteren Glättungsschaltungen enthält.

5. Einrichtung nach Anspruch 4, dadurch gekennzeichnet, dass als digitaler Testsignalgenerator (11) ein Vorwärts-/Rückwärts-Zähler vorgesehen ist.

**Claims**

1. A method of monitoring a PCM-coder/decoder device comprising an analogue-/digital converter (3) and a multiplex device (6) which precedes said converter (3) at the transmitting end and comprising a digital-/analogue converter (2) and a demultiplex device (5) which follows said converter (2) at the receiving end, wherein a digital test signal (DT) is inserted into a time slot of the PCM received signal which is not used for the transmission of telephone signals, where said digital test signal (DT), following digital-/analogue conversion, is fed as an analogue test signal (AT), via a sample- and hold circuit (4) and via the multiplex device (6), to the analogue-/digital converter (3) and, as reconverted digital test signal (DT'), is subjected to comparison with the transmitted digital test signal (DT), characterised in that the same analogue test signal (AT) is sampled several times in succession by the sample- and hold circuit (4), that during a following multiplex frame no sampling is carried out by the sample- and hold circuit (4), and that the analysis of the reconverted digital test signal (DT') at the output of the analogue-/digital converter (3) is carried out after a safety time period (T$_0$) following the last sampling procedure of the same analogue test signal (AT) during the time duration (T$_1$) of a multiplex frame.

2. A method as claimed in claim 1, characterised in that each analogue test signal (AT) is sampled three times in succession by the sample- and hold circuit (4).

3. A method as claimed in claim 1 or 2, characterised in that test signals (DT, AT) are provided with consecutive amplitude stages.

4. A device for carrying out the method claimed in one of the preceding claims, comprising a digital-/analogue converter (2) at the receiving end, the output of which is connected to a demultiplex device (5) and to a sample- and hold circuit (4), comprising an analogue-/digital converter (3) at the transmitting end, which is preceded by a multiplex device (6), to which the output of the sample- and hold circuit also leads, and comprising a monitoring control device (1) which includes a control unit (14), a digital test signal generator (11), a receiving circuit (13) and a digital comparator (12), characterised in that when the same analogue test signal (AT) has been sampled several times by the sample- and hold circuit (4), during the following multiplex pulse frame the control unit (14) suppresses the sampling procedure and that apart from a storage capacitor (42), the sample- and hold circuit (4) includes no other smoothing circuits.

5. A device as claimed in claim 4, characterised in that a forwards-/backwards counter is provided as digital test signal generator (11).

**Revendications**

1. Procédé pour contrôler un dispositif de codage/décodage MIC comportant, sur le côté émission, un convertisseur analogique/numérique (3) et un dispositif de multiplexage (6) branché en amont de ce convertisseur, et, du côté réception, un convertisseur numérique/analogique (1) et un dispositif de démultiplexage (5) branché en aval de ce convertisseur, et selon lequel on insère dans un créneau temporel, non utilisé pour la transmission de signaux téléphoniques, du signal de réception MIC, un signal d'essai numérique (DT), qui est envoyé, après la conversion numérique/analogique, en tant que signal d'essai analogique (AT) au convertisseur analogique/numérique (3), par l'intermédiaire d'un circuit d'échantillonnage et de maintien (4) et du dispositif de multiplexage (6) et est soumis, en tant que signal d'essai numérique (DT'), converti en retour, à une comparaison avec le signal d'essai numérique (DT) émis, caractérisé par le fait que le même signal d'essai analogique (AT) est exploré successivement à plusieurs reprises par ledit circuit d'échantillonnage et de maintien (4), que pendant une trame suivante d'impulsions de multiplexage, aucun échantillonnage n'est réalisé par le circuit d'échantillonnage et de maintien (4), et que l'évaluation du signal d'essai numérique (DT'), converti en retour et présent sur la sortie du convertisseur analogique/numérique (3) s'effectue, après l'écoulement d'un intervalle de temps de sécurité $(T_0)$ après le dernier processus d'échantillonnage de ce même signal d'essai analogique (AT), pendant l'intervalle de temps $(T_1)$ d'une trame de multiplexage.

2. Procédé suivant la revendication 1, caractérisé par le fait que chaque signal d'essai analogique (AT) est échantillonné successivement trois fois par le circuit d'échantillonnage et de maintien (4).

3. Procédé suivant la revendication 1 ou 2, caractérisé par le fait qu'il est prévu des signaux d'essai (DT, AT) possédant des échelons successifs d'amplitude.

4. Dispositif pour la mise en œuvre du procédé suivant l'une des revendications précédentes, comportant; sur le côté réception, un convertisseur numérique/analogique (2), dont la sortie est reliée à un dispositif de démultiplexage (5) et un circuit d'échantillonnage et de maintien (4), et, sur le côté émission, un convertisseur analogique/numérique (3), en amont duquel est branché un dispositif de multiplexage (6) auquel est également reliée la sortie du circuit d'échantillonnage et de maintien, et un dispositif de commande de contrôle (1), qui contient un dispositif de commande (14), un générateur (11) de signaux d'essai numériques, un circuit de réception (13) et un comparateur numérique (12), caractérisé par le fait qu'après un échantillonnage multiple du même signal d'essai analogique (AT) par le circuit d'échantillonnage et de maintien (4), le dispositif de commande (14) interrompt le processus d'échantillonnage pendant la trame suivante d'impulsions de multiplexage et que le dispositif d'échantillonnage et de maintien (4) ne contient, en dehors d'un condensateur de stockage (42), aucun autre circuit de lissage.

5. Dispositif suivant la revendication 4, caractérisé par le fait qu'il est prévu, comme générateur de signaux d'essai numériques (11), un compteur progressif/régressif.

FIG 1

FIG 2